(19) Europäisches Patentamt / European Patent Office / Office européen des brevets

(11) **EP 2 788 638 B1**

(12) **FASCICULE DE BREVET EUROPEEN**

(45) Date de publication et mention
de la délivrance du brevet:
**24.05.2017 Bulletin 2017/21**

(21) Numéro de dépôt: **12791791.2**

(22) Date de dépôt: **30.11.2012**

(51) Int Cl.:
*F16J 3/04* (2006.01)          *F16J 15/52* (2006.01)
*F16L 5/10* (2006.01)

(86) Numéro de dépôt international:
**PCT/EP2012/074022**

(87) Numéro de publication internationale:
**WO 2013/083478 (13.06.2013 Gazette 2013/24)**

(54) **DISPOSITIF DE CONNEXION COMPORTANT UN COUVERCLE EQUIPE D'UN MANCHON D'ETANCHEITE**

VERBINDUNGSVORRICHTUNG MIT EINEM DECKEL MIT EINER DICHTUNGSMANSCHETTE

CONNECTION DEVICE COMPRISING A COVER PROVIDED WITH A SEALING SLEEVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2011 FR 1103729**

(43) Date de publication de la demande:
**15.10.2014 Bulletin 2014/42**

(73) Titulaire: **Valeo Systemes Thermiques
78320 Le Mesnil Saint Denis (FR)**

(72) Inventeur: **QUEINNEC, Jean-Yves
F-78990 Elancourt (FR)**

(74) Mandataire: **Metz, Gaëlle et al
Valeo Systèmes Thermiques
8, rue Louis Lormand
CS 80517 La Verrière
78322 Le Mesnil Saint Denis Cedex (FR)**

(56) Documents cités:
**WO-A1-95/09998     US-A1- 2005 098 959**

## Description

La présente invention concerne le domaine technique des dispositifs de connexion comportant un boîtier ou un couvercle de protection destiné à protéger des composants devant être raccordés à des tubulures passant au travers des parois du boîtier ou du couvercle. L'invention se rapporte plus particulièrement à des dispositifs de connexion qui assurent une protection étanche aux liquides circulant dans le composant et/ou aux liquides extérieurs au composant.

Un tel dispositif de connexion comprend un couvercle de protection étanche d'un composant, raccordé à au moins une tubulure, comprenant généralement une ouverture pour la tubulure associée à des moyens d'étanchéité interposés entre la tubulure et le couvercle. Les moyens d'étanchéité permettent de faire obstacle à une circulation de liquide depuis l'extérieur vers l'intérieur du couvercle et/ou depuis l'intérieur vers l'extérieur du couvercle.

Les moyens d'étanchéité comprennent généralement une garniture d'étanchéité comprenant une portion cylindrique d'un diamètre sensiblement égal à celui de la tubulure et destinée à être engagée à force sur un bord périphérique de l'ouverture ménagée dans le couvercle.

Un tel dispositif d'étanchéité permet effectivement de faire obstacle à une infiltration et/ou une introduction de liquide entre, d'une part, la tubulure et la garniture d'étanchéité et, d'autre part, la garniture d'étanchéité et le couvercle.

Toutefois, une telle garniture d'étanchéité ne permet pas un déplacement de la tubulure par rapport au couvercle sans risque de détérioration de l'étanchéité due, notamment, à une usure ou un déchirement de la surface de contact de la garniture d'étanchéité avec la tubulure ou encore de la surface de contact de la garniture d'étanchéité avec le couvercle.

Or, de tels déplacements de la tubulure peuvent être nécessaires pour permettre, d'une part, un raccordement de la tubulure au composant, destiné à être protégé par le couvercle, et, d'autre part, un placement du couvercle, afin de limiter l'encombrement de l'ensemble.WO95/09998A1 divulgue un dispositif de connexion selon le préambule des revendications 1 et 12.

Il est donc apparu le besoin d'un nouveau type de couvercle comprenant des moyens d'étanchéité autorisant de tels mouvements relatifs du couvercle par rapport à la tubulure, sans risque d'altération des performances des moyens d'étanchéité. Afin d'atteindre cet objectif, la présente invention concerne un dispositif de connexion comportant un couvercle comprenant au moins une ouverture et des moyens d'étanchéité. Les moyens d'étanchéité comprennent au moins un fourreau élastiquement déformable comprenant une première extrémité, reliée de manière étanche à un bord périphérique de l'ouverture, et une deuxième extrémité.

Selon l'invention, les moyens d'étanchéité comprennent donc un fourreau, avantageusement tubulaire élastiquement déformable, qui est adapté :

- pour permettre un déplacement de la deuxième extrémité entre une "position d'extension", à l'extérieur du couvercle, et une "position de rétraction", à l'intérieur du couvercle, et
- pour, en "position d'extension", au moins épouser de manière étanche la paroi extérieure d'une tubulure.

La caractéristique élastique du fourreau autorise un mouvement relatif du couvercle par rapport à la tubulure sans risque d'altération des performances d'étanchéité du fourreau.

Au sens de l'invention, il convient d'entendre par "couvercle" un élément rigide destiné à protéger, seul ou généralement en association avec un autre élément rigide, un composant technique, un élément fonctionnel, .... Un couvercle selon l'invention peut posséder une forme plate ou une conformation en volume. Ainsi, un couvercle au sens de l'invention peut correspondre à une coque, une demi-coque, un boîtier, un carter...

De même, au sens de l'invention, le terme "tubulure" doit être compris dans un sens général comme pouvant désigner une tubulure destinée à la circulation de fluides, une tubulure renfermant des conducteurs électriques et/ou optiques ou, encore, une tubulure renfermant une ou plusieurs tubulures de circulation de fluides ainsi qu'éventuellement un ou plusieurs câbles électriques et/ou optiques.

Selon une caractéristique de l'invention, l'ouverture et le fourreau sont adaptés pour permettre le déplacement de l'extrémité libre du fourreau entre la "position d'extension" et la "position de rétraction " avec la tubulure à l'intérieur du fourreau. Cette caractéristique de l'invention permet d'engager la tubulure dans le fourreau de manière que la tubulure s'étende à l'intérieur du couvercle avec une extrémité suffisamment éloignée du couvercle pour permettre un montage facile d'un composant à l'extrémité de la tubulure. Cette caractéristique permet en outre, après raccordement à la tubulure, au composant d'être protégé par le couvercle.

Selon une autre caractéristique de l'invention, le fourreau est adapté pour se retourner sur lui-même lors du passage de l'extrémité libre de la "position d'extension" à la "position de rétraction". Cette caractéristique permet de faciliter le déplacement de la tubulure par rapport au fourreau en limitant les risques de détérioration du fourreau et donc des caractéristiques d'étanchéité lors du mouvement.

Selon une forme de réalisation de l'invention visant à optimiser les performances étanchéité du fourreau, la dimension intérieure du fourreau, avantageusement mesurée lorsque le fourreau non monté sur une tubulure s'étend à l'extérieur du couvercle, est inférieure à la plus grande dimension de la tubulure. Lorsque la tubulure possède une section extérieure de forme circulaire, la plus grande dimension correspond au diamètre extérieur de la tubulure.

Selon une variante de réalisation, le diamètre intérieur du fourreau est inférieur d'au moins 0,5 mm à la plus grande dimension de la section extérieure de la tubulure.

Selon une autre forme de réalisation de l'invention visant également à optimiser les performances d'étanchéité du fourreau, la face intérieure du fourreau, avantageusement lorsque le fourreau est en "position d'extension", présente au moins une lèvre périphérique d'étanchéité. Cette lèvre périphérique d'étanchéité permet de garantir des performances d'étanchéité optimales lorsque le fourreau est à l'extérieur du couvercle, c'est-à-dire en "position d'extension" qui correspond à la configuration dans laquelle il se trouve lorsque le composant est protégé par le couvercle.

Selon encore une autre forme de réalisation de l'invention, la face extérieure du fourreau, avantageusement lorsque le fourreau est en "position d'extension", est lisse. Le caractère lisse de la face extérieure du fourreau, qui est la face du fourreau en contact avec la tubulure lorsque le fourreau est en "position de rétraction", permet de faciliter l'introduction de la tubulure depuis l'extérieur vers l'intérieur du couvercle et réciproquement.

Selon une caractéristique de l'invention visant à garantir les performances étanchéité du fourreau, la longueur du fourreau, avantageusement mesurée lorsque le fourreau est en "position d'extension", est supérieure ou égale à la plus grande dimension de la section extérieure de la tubulure.

Selon une autre caractéristique de l'invention, l'épaisseur de la paroi du fourreau est comprise entre 0,03 fois et 0,075 fois la plus grande dimension de la section extérieure de la tubulure. Cette caractéristique permet de conférer au fourreau une capacité de déformation élastique et plastique suffisante pour permettre l'introduction de la tubulure sans effort excessif tout en garantissant au fourreau une endurance suffisante pour résister aux contraintes mécaniques de l'environnement en condition d'utilisation du composant qu'il protège.

Selon une forme de réalisation de l'invention, le fourreau comprend une collerette annulaire élastiquement déformable de liaison avec le couvercle. Une telle collerette permet d'assurer un découplage mécanique entre le fourreau et le couvercle. Cette caractéristique est particulièrement avantageuse lorsque la tubulure, passant dans le fourreau, est susceptible de vibrer.

Selon une variante de cette forme de réalisation, la collerette possède une largeur, avantageusement mesurée radialement, supérieure ou égale à deux fois l'épaisseur de la paroi du fourreau.

Selon une autre variante de cette forme de réalisation, la collerette possède une épaisseur sensiblement égale à l'épaisseur du fourreau. Selon l'invention, le fourreau peut être rapporté sur le couvercle ou surmoulé sur le couvercle.

Selon l'invention, le fourreau peut être réalisé en tout matériau approprié tel qu'un polymère, notamment un élastomère naturel ou synthétique.

Selon une caractéristique de l'invention, le couvercle comprend au moins deux ouvertures pour une tubulure qui sont chacun associés à des moyens d'étanchéité comprenant un fourreau élastiquement déformable. De manière préférée les deux ouvertures sont disposées sur une même face du couvercle.

L'invention concerne également un procédé de mise en place d'un couvercle selon l'invention, ce procédé comprend les étapes suivantes :

- mise en place du fourreau en "position d'extension",
- introduction, dans le fourreau, d'une tubulure jusqu'à amener le fourreau en "position de rétraction". Dans une telle configuration, la tubulure s'étend au-delà de l'extrémité libre du fourreau à l'intérieur du couvercle.
- déplacement en sens inverse de la tubulure de manière à placer le fourreau correspondant en "position d'extension". Dans une telle configuration, la tubulure s'étend à l'intérieur du fourreau et, de part et d'autre du fourreau à l'intérieur et à l'extérieur du couvercle.

Selon la présente invention, le fourreau est adapté pour permettre un déplacement de son extrémité libre entre une "position d'extension" à l'extérieur du couvercle et une "position de rétraction" à l'intérieur du couvercle. De plus, le fourreau est adapté pour, en "position d'extension" au moins, épouser de manière étanche la paroi extérieure de la tubulure.

Bien entendu les différentes caractéristiques, variantes et formes de réalisation de l'invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :

- La figure 1 est une vue arrière en perspective d'un couvercle selon la présente invention,
- La figure 2 est une vue en coupe et en perspective d'un dispositif de connexion comprenant le couvercle de la figure 1 dans lequel est logé un composant destiné à être protégé par le couvercle selon la présente invention,
- La figure 3 est une vue schématique en coupe du couvercle de la figure 1,
- Les figures 4 et 5 sont des vues schématiques en coupe du couvercle de la figure 1 monté sur une tubulure respectivement dans une "position d'extension" intermédiaire et une "position de rétraction",

- La figure 6 est une vue en coupe et en perspective du dispositif de connexion comprenant le couvercle de la figure 1 monté sur deux tubulures,
- La figure 7 est une vue en coupe et en perspective, analogue à la figure 6, du dispositif de connexion d'un composant destiné à être protégé par le couvercle selon la présente invention,
- Les figures 8 et 9 sont des vues schématiques en coupe du couvercle de la figure 1 monté sur une tubulure respectivement dans une "position de rétraction" intermédiaire et une "position d'extension", et
- La figure 10 est une vue schématique en coupe d'une variante de réalisation du couvercle selon la présente invention.

Il est à noter que, sur les figures, les éléments structurels et/ou fonctionnels communs aux différents modes de réalisation peuvent présenter les mêmes références. Ainsi, sauf mention contraire, ces éléments disposent de propriétés structurelles, dimensionnelles et matérielles identiques.

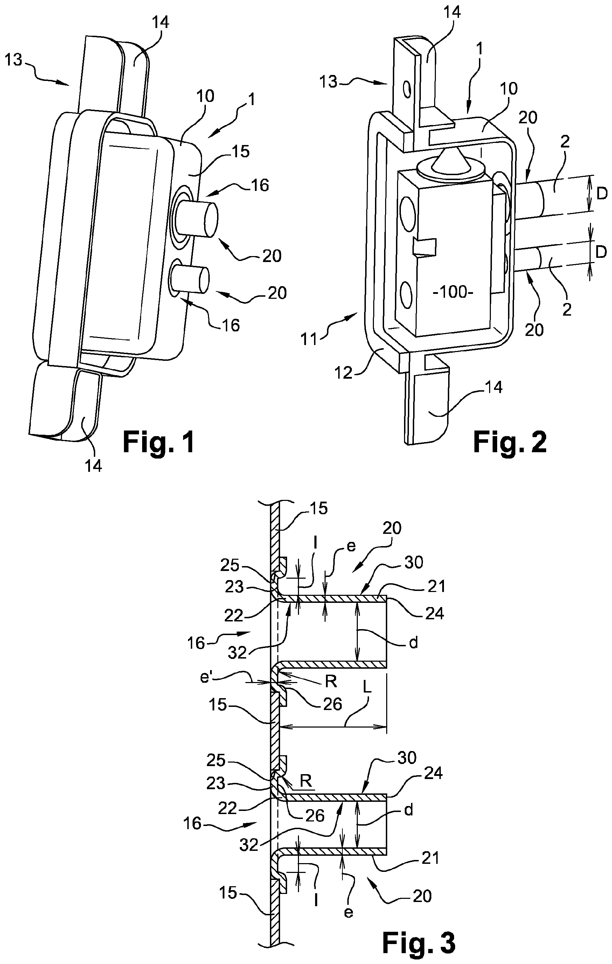

Les figures 1 et 2 sont respectivement des vues en perspective arrière et en coupe d'un couvercle 1 selon la présente invention. Plus particulièrement, la figure 2 est une vue en coupe et en perspective d'un dispositif de connexion comprenant le couvercle 1 de la figure 1 dans lequel est logé un composant 100 destiné à être protégé par le couvercle 1 selon la présente invention.

Spécifiquement, le couvercle 1 est destiné à protéger le composant 100 raccordé à au moins une tubulure 2. Selon l'exemple illustré notamment sur la figure 2, le composant 100 est connecté à deux tubulures 2.

Le couvercle 1 comprend un corps 10, avantageusement rigide, définissant un volume intérieur destiné, selon l'exemple préféré, à recevoir le composant 100.

Par ailleurs, le couvercle 1 est, préférentiellement, destiné à être fixé sur une paroi de réception, non représentée, venant fermer le volume intérieur du corps 10, au niveau d'une face ouverte 11, optionnellement bordée par une garniture d'étanchéité périphérique 12. Le corps 10 du couvercle 1 comprend alors des moyens de fixation 13, destinés à assurer la liaison du couvercle 1 sur la paroi de réception. Selon l'exemple de réalisation, les moyens de fixation 13 sont constitués par deux pattes de fixation 14.

Afin de permettre un raccordement du composant 100 à la tubulure 2, le corps 10 du couvercle 1 comprend, sur une paroi latérale 15, avantageusement opposée à la face ouverte 11 du corps 10, au moins une ouverture 16. L'ouverture 16 est associée à des moyens d'étanchéité 20.

Selon l'exemple préférentiel de réalisation, la paroi latérale 15 comporte deux ouvertures 16 destinées respectivement à une tubulure 2.

On se reporte en particulier à la figure 3 qui est une vue schématique en coupe du couvercle 1 de la figure 1. Notamment, la figure 3 présente en détail les moyens d'étanchéité 20, associés à l'ouverture 16.

Les moyens d'étanchéité 20 comprennent un fourreau 21, avantageusement tubulaire, élastiquement déformable dont une première extrémité 22 est liée par une collerette 23, préférentiellement élastiquement déformable, à la paroi latérale 15 du couvercle 1. Plus particulièrement, la collerette 23 est disposée au niveau d'un bord périphérique 25 de l'ouverture 16 correspondante. La deuxième extrémité 24 du fourreau 21 est libre et ouverte pour le passage de la tubulure 2 correspondante.

Le fourreau 21 est susceptible de s'adapter afin de coopérer de manière étanche avec la tubulure 2, présentant une plus grande dimension D. L'étanchéité obtenue résulte notamment de la capacité du fourreau 21 à enserrer la tubulure 2 lorsque le couvercle 21 est placé sur la tubulure 2 dans une configuration d'utilisation finale, plus particulièrement illustrée à la figure 2.

Selon l'exemple illustré, la configuration d'utilisation finale correspond au cas où le fourreau 21 est en "position d'extension" à l'extérieur du couvercle 1 telle qu'illustrée aux figures 1 à 3. Par "position d'extension", on entend la configuration du fourreau 21 selon laquelle le fourreau 21 est déployé vers l'extérieur du couvercle 1.

En vue d'assurer l'étanchéité recherchée en exploitant la capacité de déformation élastique, le fourreau 21 est, de préférence, tel qu'il présente, dans la "position d'extension", une dimension intérieure d inférieure à la plus grande dimension D de la tubulure 2.

Dans le cas d'une tubulure 2 de section circulaire, la plus grande dimension D de la tubulure 2 correspond au diamètre extérieur D de la tubulure 2. En conséquence, le fourreau 21 est donc de forme cylindrique présentant un diamètre intérieur d.

Préférentiellement, selon l'exemple illustré, le diamètre intérieur d vérifie la relation suivante :

$$D - 1,5\text{mm} \leq d \leq D - 0,5\text{mm}$$

Dans le cas où le couvercle 1 comprend plusieurs ouvertures 16 pour une pluralité de tubulures 2 de diamètres extérieurs différents, chaque fourreau 21 présente, de préférence, une dimension intérieure d inférieure à la plus grande dimension D de la tubulure 2 respective sur laquelle le fourreau 21 respectif est agencé.

Par ailleurs, afin assurer au fourreau 21 une résistance mécanique suffisante tout en préservant une élasticité et une faculté de déformation plastique, le fourreau 21 présente une paroi ayant une épaisseur e, préférentiellement mesurée lorsque le fourreau 21 n'est pas monté sur la tubulure 2 et en "position d'extension", vérifiant de préférence la relation suivante :

$$0,03 * d \leq e \leq 0,075 * d$$

La collerette 23, avantageusement déformable élastiquement et plastiquement, permet, notamment, d'assurer un découplage mécanique entre la tubulure 2, passant à l'intérieur du fourreau 21, et le couvercle 1.

Le découplage mécanique autorise des phénomènes de dilatation/rétraction de la tubulure 2 et évite la transmission des mouvements de faible amplitude de la tubulure 2 au couvercle 1.

Afin d'optimiser la fonction de découplage mécanique, la collerette 23 possède une largeur l, mesurée radialement entre la surface extérieure du fourreau 21 en "position d'extension" et le bord périphérique 25 de l'ouverture 16, vérifiant la relation suivante :

$$2 * e \leq l$$

De manière préférée, la largeur l de la collerette 23 vérifie la relation :

$$5 * e \leq l$$

De même, afin que la collerette 23 possède les mêmes propriétés de déformation élastique et plastique que le fourreau 21, la collerette 23 a une épaisseur e' de la collerette 23, préférentiellement mesurée dans une région médiane de la collerette 23, sensiblement égale à l'épaisseur e du fourreau 21.

Par ailleurs, la collerette 23 présente une surface extérieure 26 permettant un raccordement, d'une part, à la surface extérieure du fourreau 21 et, d'autre part, au bord périphérique 25 de l'ouverture 16. La surface extérieure 26 de la collerette 23 a un rayon de raccordement R avec le fourreau 21 vérifiant la relation suivante :

$$1,5 * e \leq R$$

Afin que le fourreau 21 épouse la tubulure 2 le traversant sur une longueur suffisante pour garantir une bonne étanchéité, le fourreau 21 présente une longueur L, mesurée dans en "position d'extension".

Préférentiellement, la longueur L du fourreau 21 est supérieure ou égale au diamètre D de la tubulure 2 traversant le fourreau 21.

Dans le cas où le couvercle 1 comprend plusieurs ouvertures 16 pour une pluralité de tubulures 2 de diamètres extérieurs différents, les fourreaux 21 présentent, de préférence, une longueur L identique, qui est, préférentiellement, supérieure ou égale au diamètre extérieur D de la plus grande des tubulures 2. Un tel choix permet d'offrir une homogénéité et une standardisation du couvercle 1 selon l'invention.

Le fourreau 21 et la collerette 23 sont réalisés dans un matériau polymère possédant des caractéristiques d'élasticité, de résistance à la déformation et de résistance aux contraintes physico-chimiques de l'environnement d'utilisation du couvercle 1, adaptées pour :

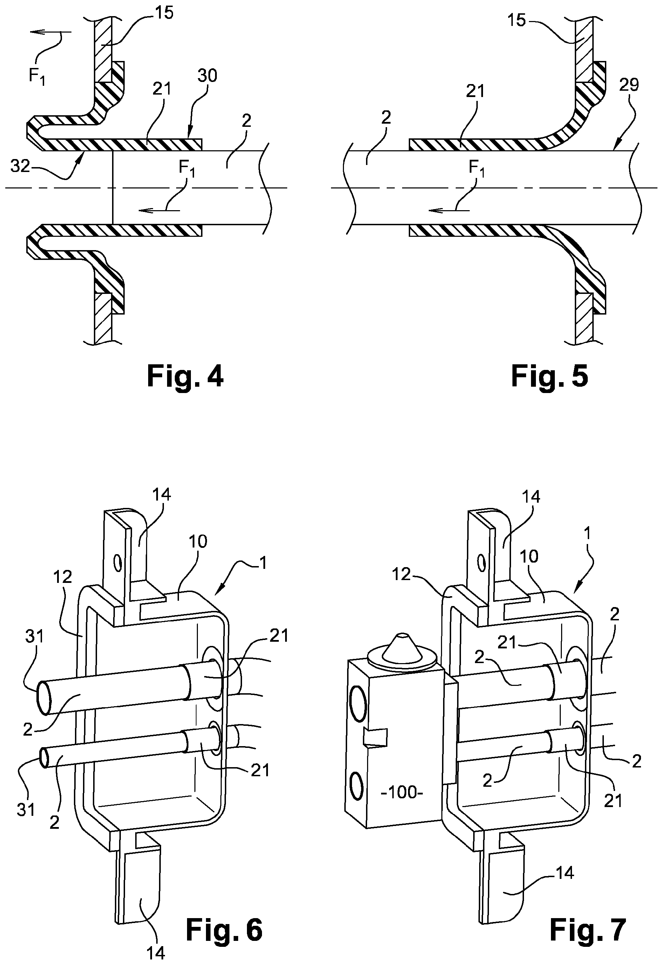

- autoriser un déplacement, comme cela apparaîtra par la suite, de la deuxième extrémité 24 du fourreau 21 entre la "position d'extension", illustrée figures 1 à 3 et une "position de rétraction" illustrée figure 5,
- et garantir dans le temps la fonction d'étanchéité du fourreau 21.

Le matériau polymère utilisé peut être un matériau élastomère comme, par exemple, du caoutchouc naturel, du SEBS, ... Un tel matériau est particulièrement adapté pour permettre un surmoulage des moyens d'étanchéité 20 sur le couvercle 1. Le matériau employé pour la réalisation des moyens d'étanchéité 20 sur le couvercle 1 peut également être utilisé pour la réalisation de la garniture d'étanchéité périphérique 12.

Le couvercle 1 peut quant à lui être réalisé en matière plastique rigide ou encore en métal.

Le couvercle 1 selon la présente invention ainsi constitué est mis en oeuvre selon un procédé particulier de mise en place.

Après fabrication et avant une mise en place, le couvercle 1 est dans un état tel qu'illustré à la figure 1 dans lequel le fourreau 21 est en "position d'extension".

A partir de cet état, la tubulure 2 est engagée dans le fourreau 21 depuis l'extérieur du couvercle 1. Pour ce faire, une extrémité de la tubulure 2 est alors présentée au niveau de la deuxième extrémité 24 du fourreau 21. Par suite, la tubulure 2 est déplacée vers l'intérieur du fourreau 21, tel qu'indiqué par la flèche F1 des figures 4 et 5.

Plus spécifiquement, les figures 4 et 5 sont des vues schématiques en coupe du couvercle 1 de la figure 1 monté sur la tubulure 2 respectivement dans la "position d'extension" intermédiaire et la "position de rétraction". La figure 4 présente une "position d'extension" intermédiaire car l'introduction de la tubulure 2 dans le fourreau 21 a entraîné un début de rétraction du fourreau 21 par rapport à la "position d'extension", présentée à la figure 3.

Compte tenu du fait que le diamètre intérieur d du fourreau 21 est inférieur au diamètre extérieur D de la tubulure 2, la surface interne du fourreau 21 adhère à la surface externe de la tubulure 2.

Par conséquent, le mouvement la tubulure 2 entraîne un repli du fourreau 21 vers l'intérieur du couvercle 1, comme le montre la figure 4.

Le mouvement de la tubulure 2 est poursuivi jusqu'à amener le fourreau 21 en "position de rétraction" telle qu'illustrée à la figure 6, qui est une vue en coupe et en perspective du couvercle 1 de la figure 1 monté sur deux tubulures 2 en "position de rétraction".

En "position de rétraction", le fourreau 21 est retourné sur lui-même. Ainsi, une face externe 29 de la tubulure 2 se trouve alors en contact avec une face 30 du fourreau 21 qui se trouvait à l'extérieur lorsque le fourreau 21 était en "position d'extension".

La face 30 du fourreau 21, qui se trouvait à l'extérieur lorsque le fourreau 21 était en "position d'extension", est dite "face extérieure 30". La face extérieure 30 du fourreau 21 est de préférence lisse de manière à favoriser le glissement de la tubulure 2 vers l'intérieur du couvercle 1.

Ainsi, il est possible de passer facilement, dans le fourreau 21 retourné, une longueur de tubulure 2 suffisante pour qu'une extrémité libre 31 de la tubulure 2 soit dégagée par rapport au couvercle 1 et facilement accessible pour le montage du composant 100.

Il est alors procédé au raccordement du composant 100 sur la tubulure 2 comme le montre la figure 7, qui est une vue en coupe et en perspective, analogue à la figure 6, illustrant l'assemblage du composant 100 monté à l'extrémité des deux tubulures 2 engagées, respectivement, dans un fourreau 21 élastiquement déformables en "position de rétraction" à l'intérieur du couvercle 1.

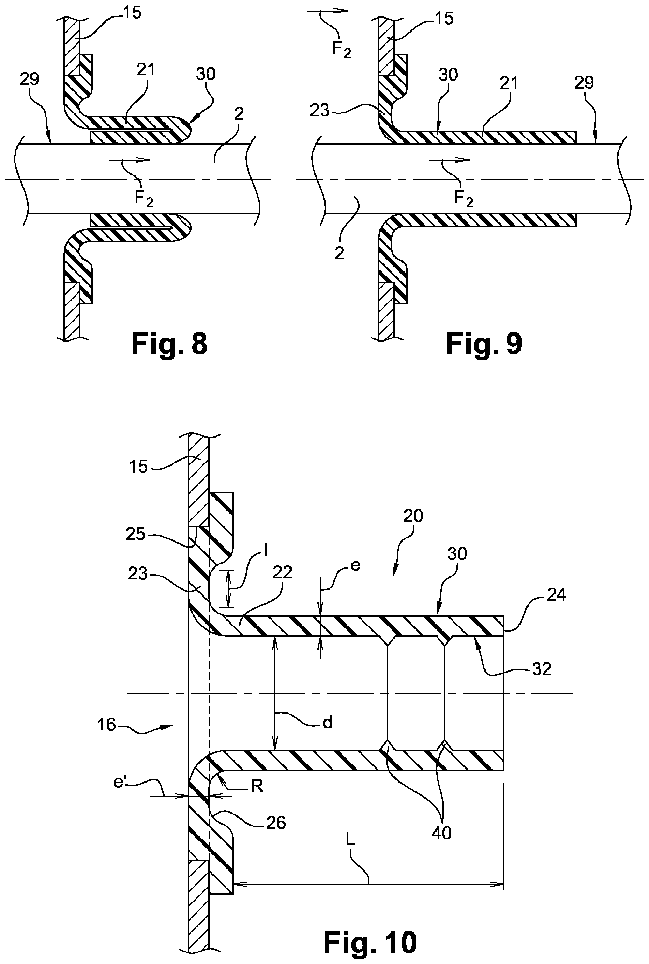

Ensuite, les tubulures 2 sont déplacées en sens inverse, comme indiqué par la flèche F2 sur les figures 8 et 9, de manière à placer le fourreau 21 en "position d'extension", telle qu'illustrée aux figures 2 et 9.

Plus spécifiquement, les figures 8 et 9 sont des vues schématiques en coupe du couvercle 1 de la figure 1 monté sur la tubulure 2 et montrant la déformation du fourreau 21 élastiquement déformable lors du passage de la "position de rétraction" intermédiaire à la "position d'extension". La figure 8 présente une "position de rétraction " intermédiaire car le déplacement de la tubulure 2 a entraîné un début de d'extension du fourreau 21 par rapport à la "position de rétraction", présentée à la figure 5.

Par suite, le composant 100 est logé dans le couvercle 1 de manière à limiter l'encombrement de l'assemblage. Lors de ce mouvement, le fourreau 21 se retourne sur lui-même.

Dans l'état de montage final présenté à la figure 9, le fourreau 21 est engagé sur la tubulure 2 et assure l'étanchéité du couvercle 1 en empêchant la circulation de liquide entre le couvercle 1 et la tubulure 2 au moins depuis l'extérieur vers l'intérieur du couvercle 1 et réciproquement.

Dans la présente description, par "intérieur", on entend un espace se trouvant dans le couvercle 1. Il s'agit, par conséquent, du volume intérieur défini par le corps 10 du couvercle 1. A l'inverse, par "extérieur", on entend un espace ne se trouvant pas dans le couvercle 1. Il s'agit, par conséquent, d'un espace se trouvant hors du volume intérieur défini par le corps 10 du couvercle 1.

Selon l'exemple décrit précédemment, le fourreau 21 présente une face intérieure 32, considérée en "position d'extension", présentant une structure lisse.

Toutefois, afin d'augmenter l'efficacité de l'étanchéité assurée par le fourreau 21, la face intérieure 32 du fourreau 21 peut comprendre au moins une lèvre périphérique d'étanchéité 40, comme le montre la figure 10 qui est une vue schématique en coupe d'une variante de réalisation du couvercle 1 selon la présente invention. Selon un exemple avantageux, la face intérieure 32 du fourreau 21 comprend deux lèvres périphériques d'étanchéité 40.

La présente invention trouve une application avantageuse dans le cadre d'une installation de chauffage, ventilation et/ou climatisation. Notamment, le couvercle 1 décrit précédemment est particulièrement adapté à loger un organe de détente intégré à une boucle de climatisation faisant partie d'une installation de chauffage, ventilation et/ou climatisation, en particulier pour un véhicule automobile.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

**Revendications**

**1.** Dispositif de connexion comportant un couvercle (1) comprenant au moins une ouverture (16) et des moyens d'étanchéité (20),

les moyens d'étanchéité (20) comprenant au moins un fourreau (21) élastiquement déformable comprenant une première extrémité (22), reliée de manière étanche à un bord périphérique (25) de l'ouverture (16), et une deuxième extrémité (24),

l'ouverture (16) et le fourreau (21) permettant un déplacement de la deuxième extrémité (24) du fourreau (21) entre une "position d'extension" et une "position de rétractation",

**caractérisé en ce que** le fourreau (21) se retourne sur lui-même lors du passage de la deuxième extrémité (24) de la "position d'extension" à la "position de rétraction".

**2.** Dispositif de connexion selon l'une des revendications précédentes, **caractérisé en ce que** le fourreau (21) comprend une face intérieure (32) comportant au moins une lèvre périphérique d'étanchéité (40).

**3.** Dispositif de connexion selon l'une des revendications précédentes, **caractérisé en ce que** le fourreau (21) comprend une face extérieure (30) lisse.

**4.** Dispositif de connexion selon l'une des revendications précédentes, **caractérisé en ce qu'**il comporte au moins une tubulure (2) présentant une plus grande dimension (D) et dans lequel le fourreau (21) présente une dimension intérieure (d) inférieure à la plus grande dimension (D) de la tubulure (2).

**5.** Dispositif de connexion selon la revendication 4, **caractérisé en ce que** la dimension intérieure (d) du fourreau (21) est inférieure d'au moins 0,5 mm à la plus grande dimension (D) de la tubulure (2).

**6.** Dispositif de connexion selon l'une des revendications précédentes, **caractérisé en ce que** le fourreau (21) présente une longueur (L) supérieure ou égale à la plus grande dimension (D) de la tubulure (2).

**7.** Dispositif de connexion selon l'une des revendications précédentes, **caractérisé en ce que** le fourreau (21) comprend une collerette annulaire (23) élastiquement déformable assurant une liaison entre le fourreau (21) et le couvercle (1).

**8.** Dispositif de connexion selon l'une des revendications précédentes, **caractérisé en ce que** le fourreau (21) comporte une paroi ayant une épaisseur (e) comprise entre 0,03 fois et 0,075 fois la plus grande dimension (D) de la tubulure (2).

**9.** Dispositif de connexion selon la revendication 8, **caractérisé en ce que** la collerette (23) possède une largeur (l) supérieure ou égale à deux fois l'épaisseur (e) de la paroi du fourreau (21).

**10.** Dispositif de connexion selon la revendication 8 ou 9, **caractérisé en ce que** la collerette (23) possède une épaisseur (e') sensiblement égale à l'épaisseur (e) de la paroi du fourreau (21).

**11.** Dispositif de connexion selon l'une des revendications des revendications précédentes, **caractérisé en ce que** le fourreau (21) est surmoulé sur le couvercle (1).

**12.** Procédé de mise en place d'un dispositif de connexion selon l'une des revendications précédentes, comprenant au moins une étape:

- de mise en place du fourreau (21) en "position d'extension",
- d'introduction dans le fourreau (21), notamment à partir de l'extérieur du couvercle (1), d'une tubulure (2) de manière à amener le fourreau (21) en "position de rétraction", et
- de déplacement en sens inverse de la tubulure (2) de manière à placer le fourreau (21) correspondant en "position d'extension".

**Patentansprüche**

**1.** Vorrichtung zur Verbindung, die eine Abdeckung (1) umfasst, die zumindest eine Öffnung (16) und Dichtungsmittel (20) umfasst,

wobei die Dichtungsmittel (20) zumindest eine elastisch verformbare Hülse (21) umfassen, die ein erstes Ende (22), das dicht mit einem Umfangsrand (25) der Öffnung (16) verbunden ist, und ein zweites Ende (24) umfasst, wobei die Öffnung (16) und die Hülse (21) eine Verschiebung des zweiten Endes (24) der Hülse (21) zwischen einer "ausgefahrenen Position" und einer "eingefahrenen Position" ermöglichen, **dadurch gekennzeichnet, dass** die Hülse (21) sich während des Durchgangs des zweiten Endes (24) von der "ausgefahrenen Position" zu der "eingefahrenen Position" auf sich selbst umdreht.

**2.** Vorrichtung zur Verbindung nach einem der vorhergehenden Ansprüche, **dadurch gekennzeichnet, dass** die Hülse (21) eine Innenfläche (32) umfasst, die mindestens eine umlaufende Dichtlippe (40) umfasst.

**3.** Vorrichtung zur Verbindung nach einem der vorhergehenden Ansprüche, **dadurch gekennzeichnet, dass** die Hülse (21) eine glatte Außenfläche (30) umfasst.

**4.** Vorrichtung zur Verbindung nach einem der vorhergehenden Ansprüche, **dadurch gekennzeichnet, dass** sie mindestens ein Rohr (2) umfasst, das eine größere Abmessung (D) aufweist, und in dem die Hülse (21) eine kleinere Innenabmessung (d) aufweist, die kleiner als die größere Abmessung (D) des Rohres (2) ist.

**5.** Vorrichtung zur Verbindung nach Anspruch 4, **dadurch gekennzeichnet, dass** die Innenabmessung (d) der Hülse (21) um wenigstens 0,5 mm kleiner als die größere Abmessung (D) des Rohres (2) ist.

**6.** Vorrichtung zur Verbindung nach einem der vorhergehenden Ansprüche, **dadurch gekennzeichnet, dass** die Hülse (21) eine Länge (L) aufweist, die größer oder gleich der größeren Abmessung (D) des Rohres (2) ist.

**7.** Vorrichtung zur Verbindung nach einem der vorhergehenden Ansprüche, **dadurch gekennzeichnet, dass** die Hülse (21) einen ringförmigen, elastisch verformbaren Flansch (23) umfasst, um eine Verbindung zwischen der Hülse (21) und der Abdeckung (1) sicherzustellen.

**8.** Vorrichtung zur Verbindung nach einem der vorhergehenden Ansprüche, **dadurch gekennzeichnet, dass** die Hülse (21) eine Wand mit einer Dicke (e) aufweist, die zwischen dem 0,03-fachen und 0,075-fachen der größeren Abmessung (D) des Rohres (2) liegt.

**9.** Vorrichtung zur Verbindung nach Anspruch 8, **dadurch gekennzeichnet, dass** der Flansch (23) eine Breite (l) aufweist, die größer oder gleich dem zweifachen der Dicke (e) der Wand der Hülse (21) ist.

**10.** Vorrichtung zur Verbindung nach Anspruch 8 oder 9, **dadurch gekennzeichnet, dass** der Flansch (23) eine Dicke (e') aufweist, die im Wesentlichen gleich der Dicke (e) der Wand der Hülse (21) ist.

**11.** Vorrichtung zur Verbindung nach einem der Ansprüche der vorhergehenden Ansprüche, **dadurch gekennzeichnet, dass** die Hülse (21) auf dem Deckel (1) angeformt ist.

**12.** Verfahren zur Herstellung einer Vorrichtung zur Verbindung nach einem der vorhergehenden Ansprüche, die mindestens umfasst einen Schritt:

> - zum Platzieren der Hülse (21) in eine "ausgefahrene Position",
> - zum Einführen in die Hülse (21), insbesondere von außerhalb der Abdeckung (1), eines Rohres (2), um die Hülse (21) in eine "eingefahrene Position" zu fahren, und
> - zum Verschieben in die entgegen gesetzte Richtung des Rohrs (2), um die Hülse (21) entsprechend in der "ausgefahrenen Position" zu platzieren.

**Claims**

**1.** A connection device comprising a cover (1) including at least one opening (16) and a sealing means (20), the sealing means (20) including at least one elastically deformable sheath (21) including a first end (22), connected in a watertight way to a peripheral edge (25) of the opening (16), and a second end (24), the opening (16) and the sheath (21) allowing the movement of the second end (24) of the sheath (21) between an "extension position" and a "retraction position",
**characterised in that** the sheath (21) turns around on itself during the passage of the second end (24) from the "extension position" to the "retraction position".

**2.** Connection device according to any one of the preceding claims, **characterised in that** the sheath (21) comprises an inner side (32) comprising at least one peripheral sealing lip (40).

**3.** Connection device according to any one of the preceding claims, wherein the sheath (21) comprises a smooth exterior side (30).

**4.** Connection device according to any one of the preceding claims, **characterised in that** it comprises at least one tube (2) presenting one larger dimension (D) and in which the sheath (21) presents an interior dimension (d) smaller than the larger dimension (D) of the tube (2).

**5.** Connection device according to Claim 4, **characterised in that** the interior dimension (d) of the sheath (21) is at least 0.5mm smaller than the larger dimension (D) of the tube (2).

**6.** Connection device according to any one of the preceding claims, **characterised in that** the sheath (21) presents a length (L) which is greater than or equal to the larger dimension (D) of the tube (2).

**7.** Connection device according to any one of the preceding claims, **characterised in that** the sheath (21) comprises an elastically deformable annular flange (23) ensuring a connection between the sheath (21) and the cover (1).

**8.** Connection device according to any one of the preceding claims, **characterised in that** the sheath (21) comprises a wall whose thickness (e) is between 0.03 times and 0.075 times the larger dimension (D) of the tube (2).

**9.** Connection device according to Claim 8, **characterised in that** the flange (23) has a width (l) which is greater than or equal to twice the thickness (e) of the wall of the sheath (21).

**10.** Connection device according to Claim 8 or 9, **characterised in that** the flange (23) has a thickness (e') which is approximately equal to the thickness (e) of the wall of the sheath (21).

**11.** Connection device according to any one of the preceding claims of the claims, **characterised in that** the sheath (21) is overmolded onto the cover (1).

**12.** A method for the implementation of the connection device according to any one of the preceding claims, including at least one step:

> - for arranging the sheath (21) in an "extension position",
> - for introducing a tube (2) into the sheath (21), in particular from the exterior of the cover (1), in such a way as to bring the sheath (21) into a "retraction position", and
- for the movement of the tube (2) in the opposite direction in such a way as to put the corresponding sheath (21) into an "extension position".

**Fig. 1**

**Fig. 2**

**Fig. 3**

Fig. 4

Fig. 5

Fig. 6

Fig. 7

**Fig. 8**

**Fig. 9**

**Fig. 10**

**EP 2 788 638 B1**

## RÉFÉRENCES CITÉES DANS LA DESCRIPTION

**Documents brevets cités dans la description**

- WO 9509998 A1